# EUROPEAN PATENT SPECIFICATION

(11) **EP 3 648 304 B1**
(45) Date of publication and mention of the grant of the patent: **11.08.2021**
(21) Application number: 19205971.5
(22) Date of filing: 29.10.2019
(51) Int. Cl.: H02K 1/02, H02K 5/02, H02K 15/02, H02K 11/01, H01F 41/02, H02K 1/20, H01F 1/26

(54) **STATOR CORE COMPRISING COBALT CARBIDE AND METHOD OF MAKING THE SAME**
STATORKERN, KOBALTKARBID UMFASSEND, UND VERFAHREN ZU SEINER HERSTELLUNG
NOYAU DE STATOR COMPRENANT DU CARBURE DE COBALT ET SON PROCÉDÉ DE FABRICATION

(30) Priority: 31.10.2018 US 201816176706
(43) Date of publication of application: 06.05.2020
(73) Proprietor: Hamilton Sundstrand Corporation, Charlotte, NC 28217-4578 (US)
(72) Inventor: COHEN, Zachary, West Hartford, CT 06119 (US); POLICANDRIOTES, Tod, Suffield, CT 06078 (US)
(74) Representative: Dehns

(56) References cited:
- WO-A1-2008/123362
- FR-A1- 2 743 203
- JP-A- H09 102 407
- JP-A- H10 256 031
- KR-A- 20180 107 661
- US-A- 4 341 965
- US-A1- 2002 083 791
- US-A1- 2004 045 635
- US-A1- 2014 117 803

## Description

### BACKGROUND

Exemplary embodiments pertain to the art of stators for electric machines and, more particularly, to a stator core comprising carbon fibers and cobalt.

Electric machines, such as motors and generators, are commonly found in industrial, commercial, aerospace, and consumer settings. Such machines are employed to drive various kinds of devices, including pumps, conveyors, compressors, fans, and others. In the case of electric motors and generators, these devices generally include a stator, which has a plurality of stator windings, surrounding a rotor.

The stator is often made from laminated heavy metals such as iron. As a result, the heavy weight of the stator can become problematic in weight sensitive contexts, for example, electric motors for aircraft and other mobile equipment. It is therefore important that weight reduction alternatives to heavy iron composites be available for formation of the stator. The stator also produces excess heat during operation due to, for example, eddy current losses in the stator. Excess heat can reduce the efficiency of the machine and result in failure. Therefore, it is important that the electric machine can efficiently dissipate excess heat, thereby reducing temperatures, improving efficiency, and increasing durability. WO 2008/123362 A1 describes a polymerizable composition and molded body. US 2004/045635 A1 describes polymeric resin bonded magnets. US 2014/117803 A1 describes magnetically loaded composite motors.

### BRIEF DESCRIPTION

The invention is defined by the appended independent claims.

### BRIEF DESCRIPTION OF THE DRAWINGS

The following descriptions should not be considered limiting in any way. With reference to the accompanying drawing, like elements are numbered alike:
FIG. 1 is a cross-section of an electric machine according to an exemplary embodiment;
FIG. 2 represents a method of forming a stator core and/or a housing according to an exemplary embodiment; and
FIG. 3 represents another method of forming a stator core and/or a housing according to an exemplary embodiment.

### DETAILED DESCRIPTION

A detailed description of one or more embodiments of the disclosed apparatus and method are presented herein by way of exemplification and not limitation with reference to the Figure.

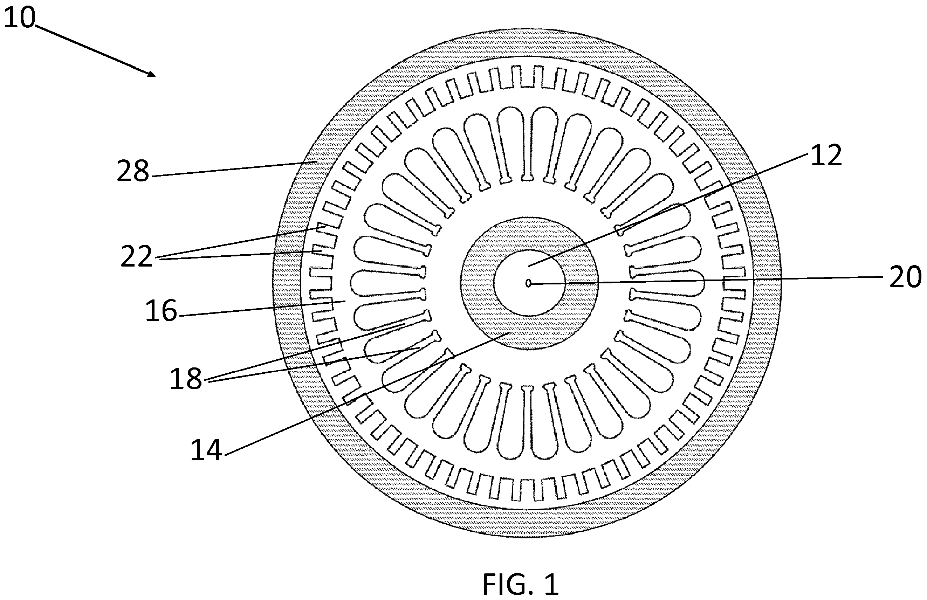

Referring to FIG. 1, an electric machine 10 includes a shaft 12, a rotor 14, a stator core 16, a plurality of mechanical teeth 18, one or more heat fins 22, and a housing 28. The stator core 16 comprises carbon fibers and cobalt carbide. The effect of the carbon fibers in combination with the inclusion of the cobalt carbide in the stator core 16 is at least one of: to reduce weight and manage thermal/electromagnetic properties of the stator core 16. Similarly, the effect of the carbon fibers in combination with the inclusion of the cobalt carbide in the stator core 16 is a reduced weight alternative to heavy iron composites available for formation of the stator core 16. In one embodiment, the stator core 16 can be reduced in weight by up to about 30% as compared to heavy iron composite stators. The stator core 16 does not sacrifice thermal/electromagnetic properties as needed for operation of the electric machine 10, for example, magnetic conductance, magnetic saturation/permeability, and high switching frequency. The stator core 16 can also efficiently dissipate heat, thereby reducing temperatures, improving efficiency, and increasing durability.

The electric machine 10 can be a motor or a generator that is able to drive (via mechanical or electrical output) various devices, including pumps, conveyors, compressors, fans, rollers, wheels, or other machines. The electric machine 10 can be a generator or motor of any architecture that has a wound stator including a permanent magnet, synchronous, induction, or switched reluctance. Additionally, all components of the electric machine 10 are not shown, and the electric machine 10 can include other components, such as those particularly suited for the intended use of the electric machine 10.

Shaft 12 extends axially along an axis of rotation (not shown), which is at a radial center 20 of electric machine 10. The shaft 12 is a cylinder with a consistent or varying radius that can be solid, hollow, or multiple pieces fastened together, depending on design considerations. The shaft 12 can be made from a variety of materials, including steel, aluminum, or other materials able to handle high stresses without deformation or failure. When used as a motor, energy can be outputted from the electric machine 10 through the rotation of the shaft 12, which would be used to drive exterior devices. Alternatively, when used as a generator, rotational energy can be inputted into the electric machine 10 by driving the shaft 12 to rotate which, in turn, induces voltage in stator windings (not shown). The induced voltage can be outputted to supply electricity to exterior devices.

The rotor 14 is radially outward from and extends axially along the axis of rotation and the shaft 12. The rotor 14 is fastened or incorporated into the shaft 12 so that the shaft 12 and the rotor 14 rotate in unison. The rotor 14 can be a lamination stack, which is a plurality of cross-sectional pieces (called sheets) fastened together to create a final piece (called the stack) having the dimensions of the rotor 14. The lamination stack of the rotor 14 can be a variety of materials, such as steel or another material, and the sheets can be fastened together through adhesive, resin, or another means, such as welding.

The rotor 14 can include multiple rotor windings, which are not shown in FIG. 1. The rotor windings are wrapped around corresponding winding supports on the rotor 14 and either induce voltage in stator windings or, depending on the configuration of the electric machine 10, stator windings induce voltage in the rotor windings due to the rotation of the rotor windings and the rotor 14 within stator windings.

The stator core 16 extends axially parallel to the axis of rotation and the shaft 12 to be radially outward from the rotor 14. The stator core 16 is physically separate from the rotor 14 so that a gap is present between an outermost surface of the rotor 14 and an innermost surface of the stator core 16. In operation, the stator core 16 is stationary relative to the shaft 12 and the rotor 14, and the shaft 12 and the rotor 14 rotate within the stator core 16 to either induce voltage in stator windings or the rotor windings on the rotor 14 depending on the excitation source. The stator core 16 has a cylindrical shape that extends axially parallel to the axis of rotation. The mechanical teeth 18 are illustrated as multiple inward projections extending from the radially inner surface of the stator core 16 towards the rotor 14. The stator 16 can have a plurality of mechanical teeth 18, including two, four, six, eight, ten, or more teeth 18. The stator windings can be wrapped around the mechanical teeth 18 so that each stator winding is wrapped around one corresponding tooth of the mechanical teeth 18. The stator windings are each continuous wires that are electrically conductive and wrapped multiple times around the mechanical teeth 18. The wires of the stator windings can be arranged in a single layer or can be multiple layers of wires.

During operation of the electric machine 10 as a generator, stator windings can either be energized with electricity to act as an electromagnet to induce voltage in the rotor 14, which is outputted to exterior devices, or the stator windings can be energized by the rotation of the magnetic field from the electrically energized rotor 14 (which creates an electromagnet) or permanent magnets of the rotor 14 so that the voltage induced in the stator windings is outputted to exterior devices.

The heat fins 22 are heat dissipating projections that extend radially outward from an outer surface of the stator core 16 away from the rotor 14. The heat fins 22 allow heat from the stator core 16 to be dissipated radially outward by providing an increased surface area. Additionally, the shape and configuration of the heat fins 22 can be optimized for specific designs, such as reduced weight, minimal diameter increase, manipulation of the flow of cooling fluid, or maximum heat transfer (fluid pressure drop and increased heat transfer are proportional to one another).

The housing 28 has a cylindrical shape centered about the axis of rotation and is radially outward from the stator core 16. The housing 28 provides protection to the electric machine 10 to ensure the inner components (i.e., the shaft 12, the rotor 14, the stator core 16, and the heat fins 22) are not damaged during manufacturing, transportation, installation, and operation, as well as preventing unwanted particulate or fluid from entering the electric machine 10. For example, the housing 28 can provide electromagnetic shielding for the electric machine 10. The housing 28 can be made from a variety of materials, including steel, aluminum, plastic, or another material or combination of materials. The housing 28 can be made from one continuous and monolithic piece or can be a number of pieces fastened together. The housing 28 can include additional features, such as orifices to allow access to the inner components of the electric machine 10 or features that allow attachment of other components to the housing 28.

The stator core 16 comprises carbon fibers and cobalt carbide, wherein the stator core 16 is greater than or equal to 40% cobalt by weight. The housing 28 can comprise carbon fibers and cobalt carbide, wherein the housing 28 is greater than or equal to 40% cobalt by weight. The stator core 16 and/or the housing 28 can include about 5% to about 30% carbon fibers by weight. The stator core 16 includes and the housing 28 can include carbon fibers within a cobalt/cobalt carbide matrix. The carbon fibers can comprise carbon fiber cloth, graphene, chopped carbon fibers, carbon microfibers, carbon nanofibers, or a combination comprising at least one of the foregoing. The use of carbon fiber reinforcement can result in improved radial magnetic conductance and improved radial heat dissipation properties. The carbon fibers can have a laminar orientation (i.e., parallel layers of carbon fibers) or a random orientation within the stator core 16 and/or the housing 28. Laminar orientation of the carbon fibers can result in improved directional magnetic properties, for example, radial magnetic conductance along the direction of the fibers. Laminar orientation of the carbon fibers can also result in improved directional thermal properties, for example, radial heat dissipation along the direction of the fibers. The stator core 16 and/or the housing 28 can include about 0.01% to about 5% cobalt carbide by weight. The cobalt carbide may be nanoscale cobalt carbide, for example, an average molecular diameter of the cobalt carbide can be less than or equal to about 100 nanometers. The stator core 16 and/or the housing 28 can include less than or equal to about 1% iron, for example, the cobalt composite material can include 0% iron.

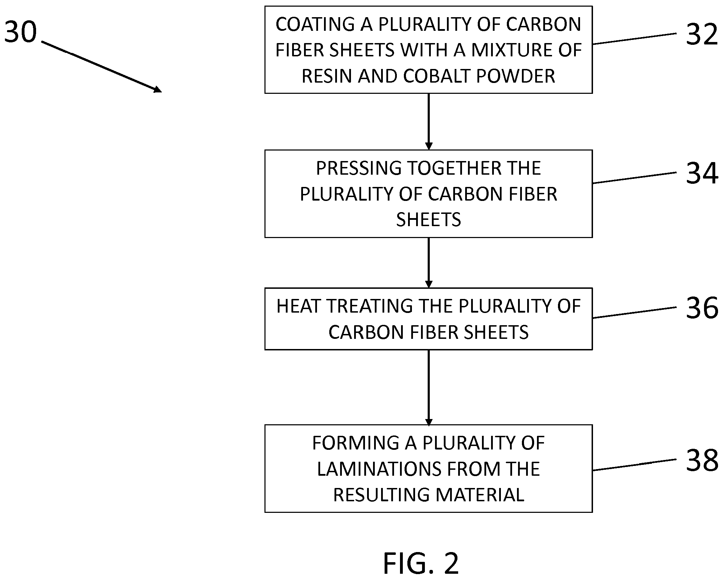

Referring to FIG. 2, a method 30 of forming the stator core 16 and/or the housing 28 is illustrated. The method includes, as indicated at block 32, coating a plurality of carbon fiber sheets with a mixture of resin and cobalt powder. For example, the mixture can comprise less than or equal to about 25% resin, for example, less than or equal to about 10% resin, for example, less than or equal to about 5% resin. The resin can be in liquid or powdered form. For example, the resin can be a phenolic resin, a powdered pitch resin, or a combination comprising at least one of the foregoing. For example, the phenolic resin can carbonize in an inert atmosphere at about 800°C to about 1200°C, for example, about 1000°C. The resin can further include carbon fibers, for example, chopped carbon fibers, carbon microfibers, carbon nanofibers, or a combination comprising at least one of the foregoing. The resin can act as a binder within the mixture. The plurality of carbon fiber sheets to be coated can comprise carbon fiber cloth, graphene, or a combination comprising at least one of the foregoing. The use of pressed carbon fiber sheets can result in a laminar orientation of the carbon fibers contained therein. The use of powdered pitch resin can result in a more crystalized cobalt/cobalt carbide matrix. At block 34, the plurality of carbon fiber sheets are pressed together. At block 36, the pressed carbon fiber sheets are heat treated. Heat treatment of the carbon fiber sheets can induce formation of nanoscale cobalt carbide in the carbon fiber sheets. At block 38, a plurality of laminations are formed from the resulting material to produce the stator core 16 and/or the housing 28. Like the rotor 14, the stator core 16 and/or the housing 28 can be a lamination stack with a plurality of lamination sheets fastened together to create stator core 16 and/or the housing 28.

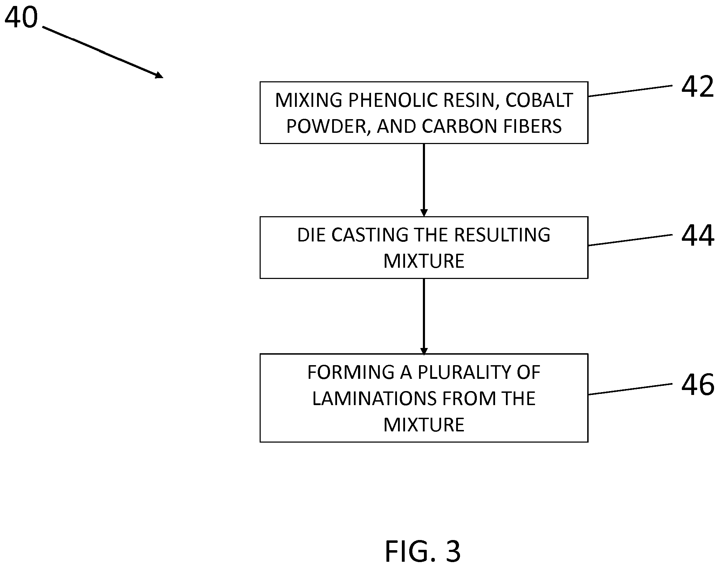

Referring to FIG. 3, a method 40 of forming the stator core 16 and/or the housing 28 is illustrated. The method includes, at block 42, mixing phenolic resin, cobalt powder, and carbon fibers together. The mixture can then be die cast as indicated at block 44. At block 46, a plurality of laminations are formed from the mixture to produce the stator core 16 and/or the housing 28. The die casting method can result in a random orientation of the carbon fibers within the cobalt composite material.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An electric machine (10), comprising:
a rotor (14); and
a stator core (16) radially outward from the rotor, the stator core being stationary relative to the rotor during operation;
wherein the stator core (16) comprises: carbon fibers and cobalt/cobalt carbide matrix,
wherein the stator core is greater than or equal to 40% cobalt by weight in total, and wherein the stator core (16) comprises about 0.01% to about 5% cobalt carbide by weight or wherein an average molecular diameter of the cobalt carbide is less than or equal to about 100 nanometers.

2. The electric machine of Claim 1, wherein the stator core (16) comprises a plurality of laminations, a plurality of mechanical teeth (18) extending radially inward toward the rotor (14), a plurality of heat fins extending radially outward and away from the rotor, or a combination comprising at least one of the foregoing.

3. The electric machine of any of the preceding claims, further comprising a housing (28) radially outward from the stator core, preferably wherein the housing (28) provides electromagnetic shielding for the electric machine.

4. The electric machine of Claim 3, wherein the housing (28) comprises: carbon fibers and cobalt/cobalt carbide matrix, and wherein the housing (28) is greater than or equal to about 40% cobalt by weight in total.

5. The electric machine of any of the preceding claims, wherein the stator core (16) comprises less than or equal to about 1% iron by weight, preferably wherein the stator core comprises 0% iron by weight.

6. The electric machine of any of the preceding claims, wherein the carbon fibers comprise carbon fiber cloth, graphene, chopped carbon fibers, carbon microfibers, carbon nanofibers, or a combination comprising at least one of the foregoing.

7. The electric machine of any of the preceding claims, wherein the carbon fibers have a laminar orientation.

8. The electric machine of any of the preceding claims, wherein the carbon fibers have a random orientation.

9. The electric machine of any of the preceding claims, wherein the stator core (16) comprises carbon fibers within a cobalt/cobalt carbide matrix.

10. The electric machine of any of the preceding claims, the stator core (16) comprises about 40% to about 70% cobalt by weight in total.

11. The electric machine of any of the preceding claims, wherein the stator core (16) comprises about 5% to about 30% carbon fibers by weight.

12. A method of forming the stator core of Claim 1, the method comprising:
coating a plurality of carbon fiber sheets with a mixture of resin and cobalt powder, wherein the resin is a phenolic resin, a powdered pitch resin, or a combination comprising at least one of the foregoing;
pressing together the plurality of carbon fiber sheets;
heat treating the plurality of carbon fiber sheets to form cobalt carbide in the carbon fiber sheets; and
forming a plurality of laminations from the resulting material to produce the stator core.

13. A method of forming the stator core of Claim 1, the method comprising:
mixing phenolic resin, cobalt powder, and carbon fibers;
die casting the resulting mixture; and
forming a plurality of laminations from the mixture to produce the stator core (16).

## Patentansprüche

1. Elektrische Maschine (10), umfassend:
einen Rotor (14); und
einen Statorkern (16) radial auswärts des Rotors, wobei der Statorkern relativ zum Rotor während des Betriebs feststehend ist;
wobei der Statorkern (16) Folgendes umfasst: Carbonfasern und eine Cobalt-/Cobaltcarbid-Matrix,
wobei der Statorkern insgesamt zu größer oder gleich 40 Gew.-% aus Cobalt besteht, und wobei der Statorkern (16) etwa 0,01 Gew.-% bis etwa 5 Gew.-% Cobaltcarbid umfasst oder wobei ein mittlerer Moleküldurchmesser des Cobaltcarbids kleiner oder gleich etwa 100 Nanometer ist.

2. Elektrische Maschine nach Anspruch 1, wobei der Statorkern (16) eine Vielzahl von Lamellen, eine Vielzahl von mechanischen Zähnen (18), die sich radial einwärts zum Rotor (14) erstrecken, eine Vielzahl von Wärmerippen, die sich radial nach außen und vom Rotor weg erstrecken oder eine Kombination umfasst, die mindestens eines der Vorstehenden umfasst.

3. Elektrische Maschine nach einem der vorstehenden Ansprüche, ferner ein Gehäuse (28) umfassend, das radial auswärts des Statorkerns liegt, vorzugsweise wobei das Gehäuse (28) eine elektromagnetische Abschirmung für die elektrische Maschine bereitstellt.

4. Elektrische Maschine nach Anspruch 3, wobei das Gehäuse (28) Folgendes umfasst:
Carbonfasern und eine Cobalt-/Cobaltcarbid-Matrix, und wobei das Gehäuse (28) insgesamt zu größer oder gleich 40 Gew.-% aus Cobalt besteht.

5. Elektrische Maschine nach einem der vorstehenden Ansprüche, wobei der Statorkern (16) kleiner oder gleich etwa 1 Gew.-% Eisen umfasst, vorzugsweise wobei der Statorkern 0 Gew.-% Eisen umfasst.

6. Elektrische Maschine nach einem der vorstehenden Ansprüche, wobei die Carbonfasern Carbonfasergewebe, Graphen, Kurzcarbonfasern, Carbonmikrofasern, Carbonnanofasern oder eine Kombination, die mindestens eines der Vorstehenden umfasst, umfassen.

7. Elektrische Maschine nach einem der vorstehenden Ansprüche, wobei die Carbonfasern eine laminare Orientierung aufweisen.

8. Elektrische Maschine nach einem der vorstehenden Ansprüche, wobei die Carbonfasern eine zufällige Orientierung aufweisen.

9. Elektrische Maschine nach einem der vorstehenden Ansprüche, wobei der Statorkern (16) Carbonfasern innerhalb einer Cobalt-/Cobaltcarbid-Matrix umfasst.

10. Elektrische Maschine nach einem der vorstehenden Ansprüche, wobei der Statorkern (16) insgesamt etwa 40 Gew.-% bis etwa 70 Gew-% Cobalt umfasst.

11. Elektrische Maschine nach einem der vorstehenden Ansprüche, wobei der Statorkern (16) etwa 5 Gew.-% bis etwa 30 Gew.-% Carbonfasern umfasst.

12. Verfahren zum Herstellen des Statorkerns nach Anspruch 1, wobei das Verfahren Folgendes umfasst:
Beschichten einer Vielzahl von Carbonfaserbögen mit einer Mischung aus Harz und Cobaltpulver, wobei das Harz ein Phenolharz, ein pulverisiertes Pechharz oder eine Kombination ist, die mindestens eines der Vorstehenden umfasst;
Zusammendrücken der Vielzahl von Carbonfaserbögen;
Wärmebehandeln der Vielzahl von Carbonfaserbögen, um Cobaltcarbid in den Carbonfaserbögen zu bilden; und
Herstellen einer Vielzahl von Lamellen aus dem resultierenden Material, um den Statorkern herzustellen.

13. Verfahren zum Herstellen des Statorkerns nach Anspruch 1, wobei das Verfahren Folgendes umfasst:
Mischen von Phenolharz, Cobaltpulver und Carbonfasern;
Spritzgießen des resultierenden Gemischs; und
Herstellen einer Vielzahl von Lamellen aus dem Gemisch, um den Statorkern (16) herzustellen.

## Revendications

1. Machine électrique (10), comprenant :
un rotor (14) ; et
un noyau de stator (16) radialement vers l'extérieur du rotor, le noyau de stator étant stationnaire par rapport au rotor pendant le fonctionnement ;
dans laquelle le noyau de stator (16) comprend : des fibres de carbone et une matrice de cobalt/carbure de cobalt,
dans laquelle le noyau de stator est supérieur ou égal à 40 % en poids de cobalt au total, et dans laquelle le noyau de stator (16) comprend environ 0,01 % à environ 5 % de carbure de cobalt en poids ou dans laquelle un diamètre moléculaire moyen du carbure de cobalt est inférieur ou égal à environ 100 nanomètres.

2. Machine électrique selon la revendication 1, dans laquelle le noyau de stator (16) comprend une pluralité de stratifications, une pluralité de dents mécaniques (18) s'étendant radialement vers l'intérieur vers le rotor (14), une pluralité d'ailettes thermiques s'étendant radialement vers l'extérieur et à distance du rotor, ou une combinaison comprenant au moins l'un des éléments précédents.

3. Machine électrique selon l'une quelconque des revendications précédentes, comprenant en outre un boîtier (28) radialement vers l'extérieur du noyau de stator, de préférence dans laquelle le boîtier (28) fournit un blindage électromagnétique pour la machine électrique.

4. Machine électrique selon la revendication 3, dans laquelle le boîtier (28) comprend :
des fibres de carbone et une matrice de cobalt/carbure de cobalt, et dans laquelle le boîtier (28) est supérieur ou égal à environ 40 % de cobalt en poids au total.

5. Machine électrique selon l'une quelconque des revendications précédentes, dans laquelle le noyau de stator (16) comprend environ 1 % de fer en poids ou moins, de préférence dans laquelle le noyau de stator comprend 0 % de fer en poids.

6. Machine électrique selon l'une quelconque des revendications précédentes, dans laquelle les fibres de carbone comprennent un tissu de fibres de carbone, du graphène, des fibres de carbone coupées, des microfibres de carbone, des nanofibres de carbone ou une combinaison comprenant au moins l'un des éléments précédents.

7. Machine électrique selon l'une quelconque des revendications précédentes, dans laquelle les fibres de carbone ont une orientation lamellaire.

8. Machine électrique selon l'une quelconque des revendications précédentes, dans laquelle les fibres de carbone ont une orientation aléatoire.

9. Machine électrique selon l'une quelconque des revendications précédentes, dans laquelle le noyau de stator (16) comprend des fibres de carbone à l'intérieur d'une matrice de cobalt/carbure de cobalt.

10. Machine électrique selon l'une quelconque des revendications précédentes, le noyau de stator (16) comprend environ 40 % à environ 70 % de cobalt en poids au total.

11. Machine électrique selon l'une quelconque des revendications précédentes, dans laquelle le noyau de stator (16) comprend environ 5 % à environ 30 % de fibres de carbone en poids.

12. Procédé de formation du noyau de stator selon la revendication 1, le procédé comprenant :
le revêtement d'une pluralité de feuilles de fibres de carbone avec un mélange de résine et de poudre de cobalt, dans lequel la résine est une résine phénolique, une résine de brai en poudre ou une combinaison comprenant au moins l'un des éléments précédents ;
le pressage de la pluralité de feuilles de fibres de carbone ensemble ;
le traitement thermique de la pluralité de feuilles de fibres de carbone pour former du carbure de cobalt dans les feuilles de fibres de carbone ; et
la formation d'une pluralité de stratifications à partir du matériau résultant pour produire le noyau de stator.

13. Procédé de formation du noyau de stator selon la revendication 1, le procédé comprenant :
le mélange de résine phénolique, de poudre de cobalt et de fibres de carbone ;
le moulage sous pression du mélange résultant ; et
la formation d'une pluralité de stratifications à partir du mélange pour produire le noyau de stator (16).
